# EUROPEAN PATENT APPLICATION

(11) **EP 3 949 812 A1**
(43) Date of publication of application: **09.02.2022**
(21) Application number: 21188099.2
(22) Date of filing: 27.07.2021
(51) Int. Cl.: A47J 27/04, A47J 36/06

(54) **AIR FRYER WITH STEAM EXHAUST FUNCTION**

(30) Priority: 28.07.2020 CN 202021523809 U
(71) Applicant: Daka Research Inc., VG1110 Tortola (VG); Cixi Homease Electrical Products Co., Ltd., Cixi, Zhejiang 315300 (CN)
(72) Inventor: Chow, Jesse, Vancouver, British Columbia,, V5K1K5 (CA)
(74) Representative: Wang, Bo

(57) **Abstract**

The utility model, relating to an air fryer with steam exhaust function, is comprised of a lid, an inner pot, a pot body and a baking device. The mentioned lid is connected with the pot body, the inner pot is arranged in the pot body, and the baking device is set on the lid. It also includes a water storage tank, a water pump, a steam generator, an exhaust pipe and a control device. The mentioned water pump and the steam generator are arranged in the pot body. The water storage tank is detachably installed on the pot body. The inlet of the water pump is connected with the water storage tank,while its outlet is connected with the water inlet of the steam generator.The steam outlet of the steam generator is connected with the inner pot.The mentioned exhaust pipe is arranged on the lid. One end of the exhaust pipe passes through the lid to connect with the outside, while its other end is connected with the inner pot. The mentioned baking device, the water pump and the steam generator are respectively electrically connected with the control device. The control device controls the start and stop of the baking device, the steam generator and the water pump. This remains the gravy and the crispy effect on the food surface, makes the food more delicious, and meets the different cooking needs of users.

## Description

### Technical Field

The utility model relates to an air fryer with steam exhaust function.

### Background Technology

The air fryer uses high-speed air circulation technology to quickly heat the air through the top baking device.With the help of the high-power fan, a rapid circulating heat flow inside the food basket is formed to make the surface of the food crispy and remain the moisture inside the food. As a result, you can enjoy the fragrant and crisp taste of ordinary fried food,meanwhile, a very little oil fume appears in the cooking process.

However, the existing air fryer can only bake food and it will easily lose the moisture in the food, as a result, it will affect the taste of the food. We have developed an air fryer that can not only bake the food, but also steam or replenish moisture to the food, thereby the taste of the food is enhanced. The air fryer is very important.

### Content of utility model

The utility model intends to provide an air fryer with steam exhaust function that can not only bake food, but also steam food or supplement food moisture.

The purpose of the utility model is achieved as follows:
An air fryer with steam exhaust function, is comprised of a lid, an inner pot, a pot body and a baking device. The mentioned lid is connected with the pot body, the inner pot is arranged in the pot body, and the baking device is set on the lid. It also includes a water storage tank, a water pump, a steam generator, an exhaust pipe and a control device. The mentioned water pump and the steam generator are arranged in the pot body. The water storage tank is detachably installed on the pot body. The inlet of the water pump is connected with the water storage tank,while its outlet is connected with the water inlet of the steam generator. The steam outlet of the steam generator is connected with the inner pot.The mentioned exhaust pipe is arranged on the lid. One end of the exhaust pipe passes through the lid to connect with the outside, while its other end is connected with the inner pot. The mentioned baking device, the water pump and the steam generator are respectively electrically connected with the control device. The control device controls the start and stop of the baking device, the steam generator and the water pump.

When the user sets the steaming and basing mode, the control device first starts the baking device to bake the food in the inner pot, and then starts the steam generator to steam the food in the inner pot to increase moisture. The baking and steaming actions are cycled back and forth until the food is cooked. The control device starts the baking device to bake the food in the inner pot and thereby it remains the gravy and the crispy effect of the food surface, making the food more delicious and meeting the different cooking needs of users.

The purpose of the utility model can also be solved by the following technical measures:
As a more specific solution, a water storage tank installation area is provided on one side of the pot body, and the water storage tank is clamped in the water storage tank installation area.The water storage tank is detachably installed on the pot body and it is convenient for the user to replenish the water source in time.

As a more specific solution, the mentioned pot body is provided with an inlet channel, corresponding to the water storage tank installation area. The inlet of the inlet channel faces the installation area of the water storage tank, and the outlet of the water inlet channel is connected with the inlet of the water pump.A water pipe is arranged in the water storage tank. One end of the water pipe extends into the water storage tank and is close to the bottom thereof, and its other end is inserted into the water inlet channel to connect with the water inlet channel.

As a more specific solution, a steam exhaust valve is provided on the top of the lid. One end of the exhaust pipe is connected with the steam exhaust valve, and its other end faces the inner pot and connect with the inner pot. The steam generated in the process of baking or cooking the food exhausts through the exhaust pipe and the steam exhaust valve.

As a more specific solution, the mentioned baking device includes a motor, a motor bracket, a fan, a reflector, and a heating pipe. The motor bracket is arranged in the inner cavity of the lid, while the motor is arranged on the motor bracket. The rotating shaft of the motor passes through the motor bracket to connect with the fan. The mentioned reflector is arranged in the lid and below the fan, while the heating pipe is arranged in the reflector and faces the inner pot. The motor and the heating pipe are respectively electrically connected with the control device.

As a more specific solution, it also includes a bottom heating pipe that is located under the inner pot and is electrically connected with the control device.

As a more specific solution, the steam generator includes a shell, an electric heating pipe and a heating pipe. The electric heating pipe and the heating pipe are arranged in the shell. The electric heating pipe is close to the heating pipe. The electric heating pipe heats the water flowing through the heating pipe to boil to form steam. One port of the heating pipe is connected with the water inlet of the steam generator, and its other port is connected with the steam outlet of the steam generator.

As a more specific solution, it also includes a one-key start button that is electrically connected with the control device. After the one-key start button is activated, the control device executes a preset program to start and stop the baking device and the steam generator at intervals. The user,by the one-key start button, starts the control device to automatically execute the preset program to start and stop the baking device and the steam generator at interval. The food is cooked in a steaming and baking cycle to make the food more delicious.

The beneficial effects of the present utility model are described as follows:
In the utility model, when the user sets the steaming and baking mode, the control device first starts the baking device to bake the food in the inner pot, and then starts the steam generator to steam the food in the inner pot to increase moisture. The baking and steaming actions are cycled back and forth until the food is cooked. The control device starts the baking device to bake the food in the inner pot, thereby remaining the gravy and the crispy effect of the food surface, making the food more delicious and meeting the different cooking needs of users.

### Description of the attached figures.

Fig. 1 is a schematic diagram of an air fryer with steam exhaust function.
Fig. 2 is a schematic diagram from another angle of the air fryer with steam exhaust function.
Fig. 3 is a top view of an air fryer with steam exhaust function.
Fig. 4 is A-A cross-sectional view of Fig. 3.
Fig. 5 is B-B cross-sectional view of Fig. 3.
Fig. 6 is a schematic diagram on the separation of the pot body and the water storage tank of the air fryer with steam exhaust function.
Fig. 7 is an exploded schematic diagram of an air fryer with steam exhaust function.
Fig. 8 is a schematic diagram of a water storage tank in an air fryer with steam exhaust function.
Fig. 9 is a schematic diagram of a steam generator in an air fryer with steam exhaust function.

### Specific implementation methods

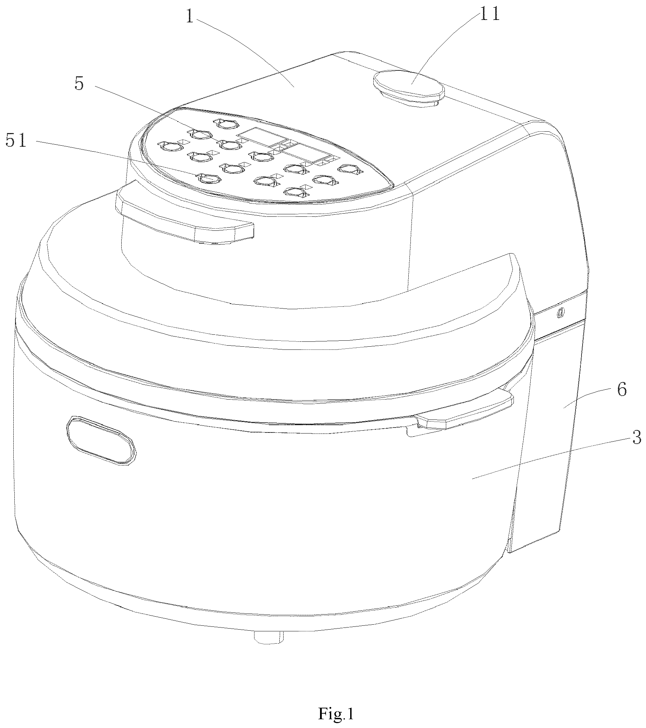

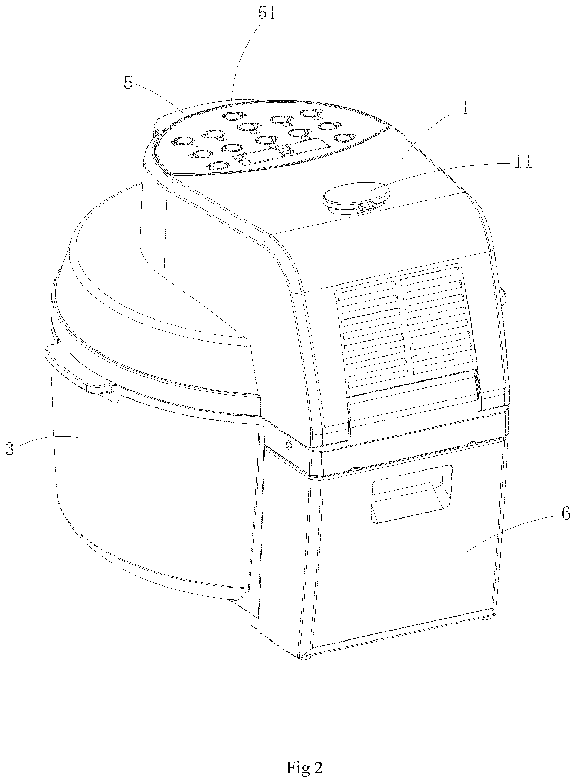

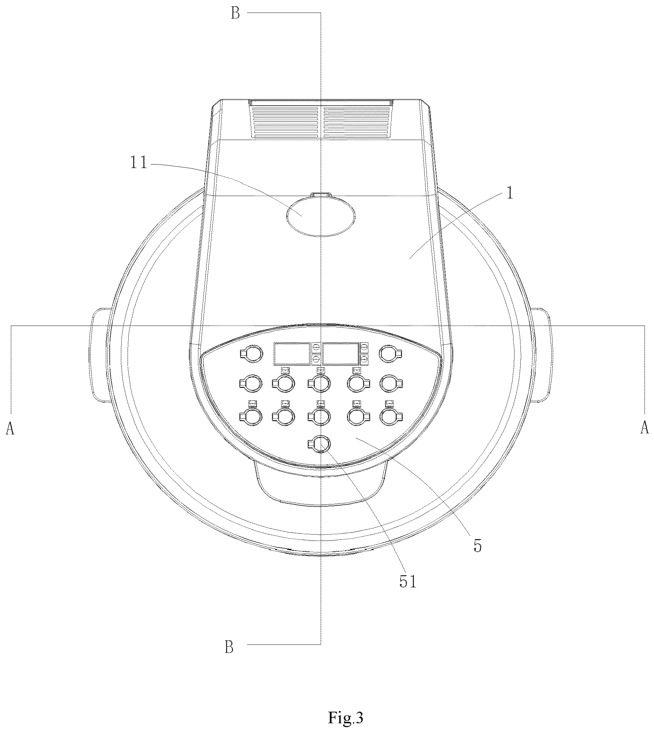

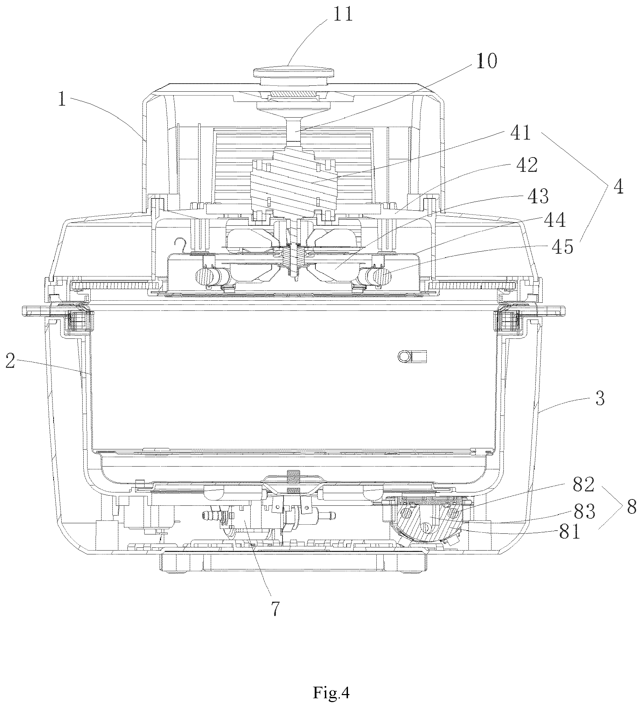

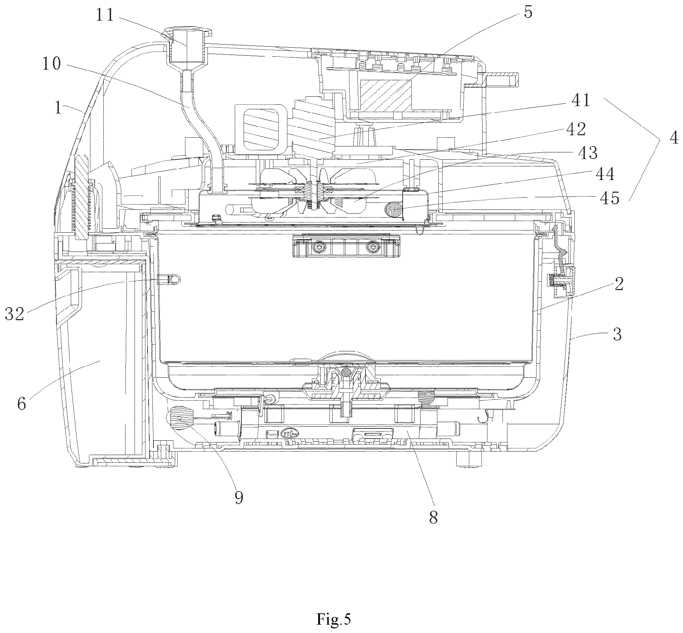

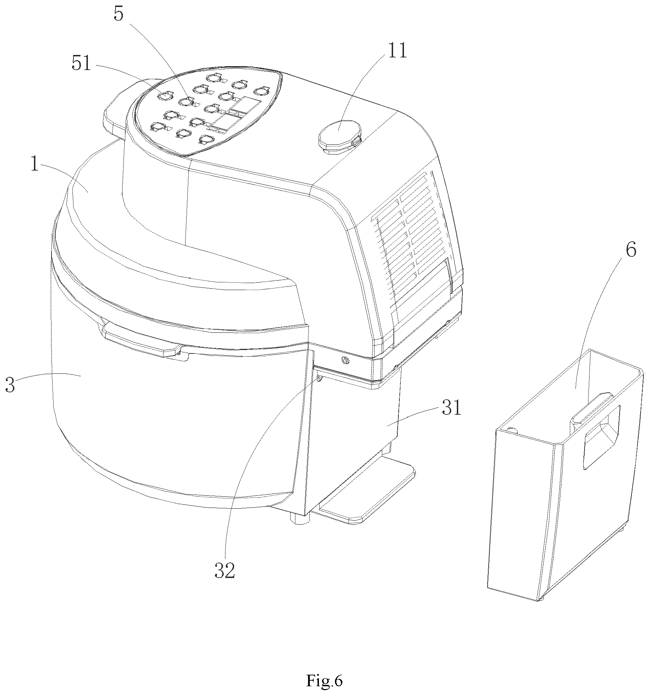

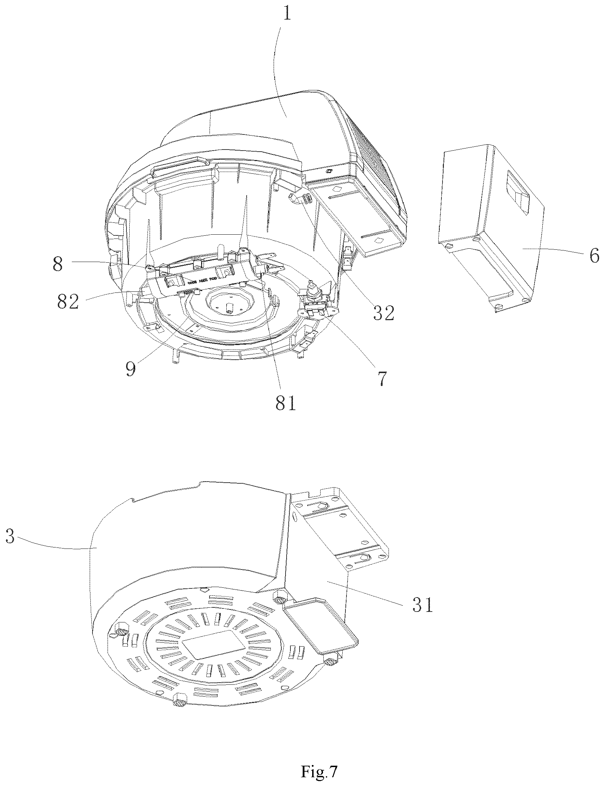

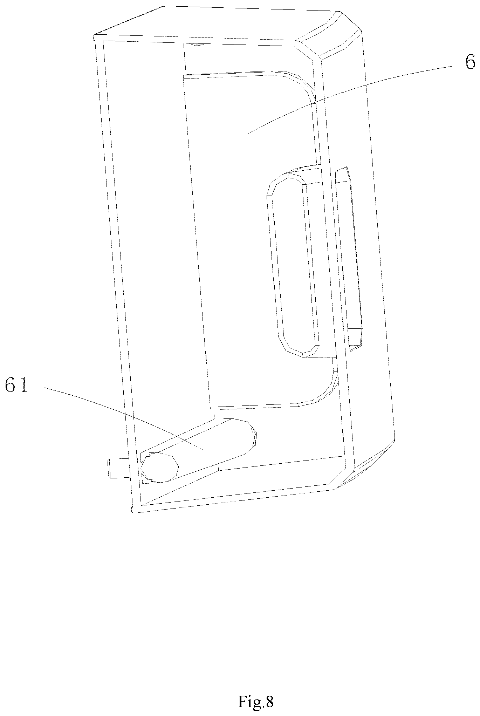

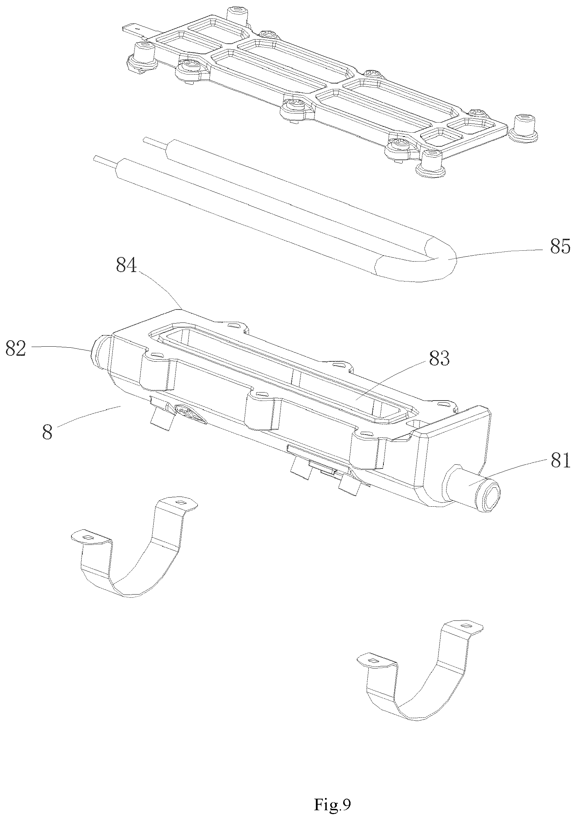

The utility model is further described in conjunction with the attached figures and the embodiments as follows:
Among embodiments, by combining Figures 1-9, an air fryer with steam exhaust function includes a lid 1, an inner pot 2, a pot body 3, a baking device 4, a control device 5, a steam exhaust valve 11, a water storage tank 6,a water pump 7, a steam generator 8, a bottom heating pipe 9 and the exhaust pipe 10. The mentioned lid 1 and the pot body 3 are connected,and the inner pot 2 is arranged in the pot body 3.

The baking device 4 includes a motor 41, a motor bracket 42, a fan 43, a reflector 44, and a heating pipe 45. The mentioned motor bracket 42 is arranged in the inner cavity of the lid 1, and the motor 41 is arranged on the motor bracket 42. The rotating shaft passes through the motor bracket 42 and is connected with the fan 43.The reflector 44 is arranged in the lid 1 and below the fan 43.The heating pipe 45 is arranged in the reflector 44 and faces the inner pot 2.

The water pump 7 and the steam exhaust valve 11 are arranged in the pot body 3. One side of the pot body 3 is provided with a water storage tank installation area 31. The pot body 3 is provided with a water inlet channel 32 at a position corresponding to the water storage tank installation area 31. The inlet of the water inlet channel extends to the storage tank installation area 31, while the outlet of the water inlet channel 32 is connected with the inlet of the water pump 7. The outlet of the water pump 7 is connected with the water inlet 81 of the steam generator 8, and the steam outlet 82 of the steam generator 8 is connected with the inner pot 2.

A water pipe 61 is arranged in the mentioned water storage tank 6.The water storage tank 6 is clamped in the water storage tank installation area 31 to realize the detachable connection between the water storage tank 6 and the pot body 3. One end of the water pipe 61 extends into the water storage tank 6 and is close to its bottom and the other end of the water pipe 61 is inserted into the water inlet channel 32 to connect with the water inlet channel 32.

The steam exhaust valve 11 is arranged on the top of the lid 1, and the exhaust pipe 10 is arranged in the lid 1. One end of the exhaust pipe 10 connects with the steam exhaust valve 11, and the other end of the exhaust pipe 10 connects with the inner pot 2 toward the pot 3.

The control device 5 is arranged in the lid 1. The mentioned motor 41, the fan 43, the heating pipe 45, the steam generator 8 and the water pump 7 are respectively electrically connected with the control device 5.The control device 5 controls the start and stop of the motor 41, the heating pipe 45, the steam generator 8 and the water pump 7.

The bottom heating pipe 9 is arranged under the inner pot 2, and the bottom heating pipe 9 is electrically connected with the control device 5. The steam generator 8 includes a shell 84, an electric heating pipe 85 and a heating pipe 83. The electric heating pipe 85 and the heating pipe 83 are arranged in the housing 84. The electric heating pipe 85 is close to the heating pipe 83, and the electric heating pipe 85 will heat the water passing through the heating pipe 83 to boil to form steam. One port of the heating pipe 83 is connected with the water inlet 81 of the steam generator 8, while the other port of the heating pipe 83 is connected with the steam outlet 82 of the steam generator 8.

It also includes a one-key start button 51 that is electrically connected with the control device 5. After the one-key start button 51 is activated, the control device 5 executes a preset program to start and stop the baking device 4 and the steam generator 8 at intervals. The user presses the one-key start button 51 and then the control device 5 automatically executes the preset program to start and stop the baking device 4 and the steam generator 8 at intervals.The food is cooked in a steaming and baking cycle to make the food more delicious.

The preset program is described as that: start the steam generator 8 first, steam the food in the inner pot 2 at full speed for 10 minutes, then steam the food in the inner pot 2 slowly for 10 minutes, and finally start the baking device 4 to bake the food in the inner pot 2 for 10 minutes.

### Working principle:

The user places the food in the inner pot 2 and buckles the lid 1 and the pot body 3. If the user sets the baking mode, the control device 5 starts the motor 41 and the heating pipe 45. The heating pipe 45 generates heat, and the motor 41 drives the fan 43 to blow the heat to the inner pot 2 to bake the food in the inner pot 2.The operation is simple.

The user places the food in the inner pot 2 and buckles the lid 1 with the pot body 3. If the user sets the baking mode, the control device 5 activates the bottom heating pipe 9. The bottom heating pipe 9 generates heat to transfer to the inner pot 2. Thus, the food in the inner pot 2 can be baked. The operation is simple.

The user puts the food in the inner pot 2 and buckles the lid 1 and the pot body 3. If the user sets the steaming mode: Step 1: the control device 5 starts the motor 41 and the heating pipe 45.The heating pipe 45 generates heat, and the motor 41 drives the fan 43 to rotate and blow the heat to the inner pot 2 so as to bake the food in the inner pot 2.

Step 2: The control device 5 starts the water pump 7 and the steam generator 8. The water pump 7 pumps the water in the storage tank 6 into the steam generator 8. The steam generator 8 heats the water to form steam, and the steam enters the inner pot 2 to steam food.

Step 1 and Step 2 are repeated by the control device 5, and the cycle alternates. When the food is cooked, the control device 5 activates the heating pipe 45 in Step 1 to bake the food in the inner pot 2 so as to remain the gravy and the crispy surface of the food and make the food more delicious and meet the different cooking needs of users.

## Claims

1. An air fryer with steam exhaust function, is comprised of a lid, an inner pot, a pot body and a baking device. The mentioned lid is connected with the pot body, the inner pot is arranged in the pot body, and the baking device is set on the lid. It is **characterized in that** it also includes a water storage tank, a water pump, a steam generator, an exhaust pipe and a control device. The mentioned water pump and the steam generator are arranged in the pot body. The water storage tank is detachably installed on the pot body. The inlet of the water pump is connected with the water storage tank,while its outlet is connected with the water inlet of the steam generator.The steam outlet of the steam generator is connected with the inner pot.The mentioned exhaust pipe is arranged on the lid. One end of the exhaust pipe passes through the lid to connect with the outside, while its other end is connected with the inner pot. The mentioned baking device, the water pump and the steam generator are respectively electrically connected with the control device. The control device controls the start and stop of the baking device, the steam generator and the water pump.

2. The air fryer with steam exhaust function, described in Claim 1, is **characterized in that**: a water storage tank installation area is provided on one side of the pot body, and the water storage tank is clamped in the water storage tank installation area.

3. The air fryer with steam exhaust function, described in Claim 2, is **characterized in that** the pot body is provided with an inlet channel, corresponding to the installation area of the water storage tank. The inlet of the inlet channel faces the installation area of the water storage tank, and the outlet of the water inlet channel is connected with the inlet of the water pump.A water pipe is arranged in the water storage tank. One end of the water pipe extends into the water storage tank and is close to the bottom thereof, and its other end is inserted into the water inlet channel to connect with the water inlet channel.

4. The air fryer with steam exhaust function,described in Claim 1, is **characterized in that** the top of the lid is provided with a steam exhaust valve. One end of the exhaust pipe is connected with the steam exhaust valve, and its other end faces the inner pot and connects with the inner pot.

5. The air fryer with steam exhaust function, described in Claim 1, is **characterized in that** the mentioned baking device comprises a motor, a motor bracket, a fan, a reflector and a heating pipe. The mentioned motor bracket is arranged in the inner cavity of the lid , while the motor is arranged on the motor bracket. The rotating shaft of the motor passes through the motor bracket to connect the fan and the reflector is arranged in the lid and below the fan. The heating pipe is arranged in the reflector,facing the inner pot. The mentioned motor and the heating pipe are respectively electrically connected with the control device.

6. The air fryer with steam exhaust function, described in Claim 1, is **characterized in that** it further comprises a bottom heating pipe that is located below the inner pot and electrically connected with the control device.

7. The air fryer with steam exhaust function, described in Claim 1, is **characterized in that** the steam generator comprises a shell, an electric heating pipe and a heating pipe. The mentioned electric heating pipe and the heating pipe are both arranged in the shell, and the electric heating pipe is close to the heating pipe.The electric heating pipe heats the water flowing through the heating pipe to boil to form steam. One port of the heating pipe is connected with the water inlet of the steam generator, and its other port is connected with the steam outlet of the steam generator.

8. The air fryer with steam exhaust function, described in Claim 1, is **characterized in that** it further comprises a one-key start button that is electrically connected with the control device. After the one-key start button is started, the control device executes a preset program to start and stop the baking device and the steam generator at intervals.
